# EUROPÄISCHE PATENTSCHRIFT

(11) **EP 3 482 105 B1**
(45) Veröffentlichungstag und Bekanntmachung des Hinweises auf die Patenterteilung: **18.11.2020**
(21) Anmeldenummer: 17731087.7
(22) Anmeldetag: 07.06.2017
(51) Int. Cl.: F16H 57/04

(54) **FAHRZEUGGETRIEBE**
VEHICLE GEARBOX
BOÎTE DE VITESSES DE VÉHICULE

(30) Priorität: 07.07.2016 DE 102016212369
(43) Veröffentlichungstag der Anmeldung: 15.05.2019
(73) Patentinhaber: ZF Friedrichshafen AG, 88046 Friedrichshafen (DE)
(72) Erfinder: FRITSCHLE, Ulrich, 88069 Tettnang (DE)
(74) Vertreter: ZF Friedrichshafen AG
(86) Internationale Anmeldenummer: PCT/EP2017/063820
(87) Internationale Veröffentlichungsnummer: WO 2018/007085

(56) Entgegenhaltungen:
- EP-A1- 0 481 584
- EP-A1- 2 317 181
- DD-A1- 223 205
- DE-C1- 3 334 411

## Beschreibung

Die Erfindung betrifft ein Fahrzeuggetriebe gemäß den Merkmalen des Oberbegriffes von Anspruch 1. So ein Fahrzeuggetriebe ist aus der DD223205A bekannt.

Aus der DE 102012216224 A1 ist ein Fahrzeuggetriebe bekannt, bei dem ein Wechselgetriebe zum schaltbaren Einstellen verschiedener Drehzahlverhältnisse zusammen mit einem Wendesatz zur Drehrichtungsumkehr in einem gemeinsamen Getriebegehäuse angeordnet sind. Das Fahrzeuggetriebe umfasst dazu eine Antriebswelle, eine Abtriebswelle sowie eine Mehrzahl von Getriebeelementen in Form von Planetenradsätzen und Schaltelementen wie Kupplungen und Bremsen. Eine dort beschriebene Ausführungsform sieht eine Schaltkupplung an der Abtriebswelle vor. Mit dieser Schaltkupplung kann eine geschlossene und eine unterbrochene Triebverbindung zwischen den Getriebeelementen und der Abtriebswelle eingestellt werden.

In Fahrsituationen, in denen eine Leistungsübertragung über das Fahrzeuggetriebe nicht erwünscht ist oder nicht benötigt wird, kann der Antriebsmotor abgeschaltet werden, obwohl sich das Fahrzeug noch in Fahrt befindet. Praktiziert wird dies beispielsweise um eine energiesparende Fahrweise bei zeitweise abgeschaltetem Antriebsmotor zu erreichen oder um das Fahrzeug ohne eigenen Antrieb abzuschleppen oder zu rangieren. Die Triebverbindung wird dazu zweckmäßig an der Abtriebswelle im Fahrzeuggetriebe getrennt, um Schleppverluste in dem Fahrzeuggetriebe durch mitrotierende Zahnräder und andere Getriebeelemente zu vermeiden. Infolge der getrennten Triebverbindung zwischen den Getriebeelementen und der Abtriebswelle stehen die Getriebeelemente im Fahrzeuggetriebe still. In solchen Situationen wird auch eine über die Getriebeelemente angetriebene Schmierölpumpe nicht mehr angetrieben, wodurch die Schmierölversorgung in dem Fahrzeuggetriebe entfällt. Gegebenenfalls ist auch eine durch das Eintauchen der Getriebeelemente in einen Ölsumpf des Fahrzeuggetriebes bewirkte Tauchschmierung in solchen Situationen nicht mehr wirksam, wegen des Stillstandes der Getriebeelemente.

Die Abtriebswelle des Fahrzeuggetriebes wird bei rollendem bzw. geschlepptem Fahrzeug und getrennter Triebverbindung zwischen den Getriebeelementen und der Abtriebswelle jedoch von dem abtriebsseitigen Antriebsstrang weiter angetrieben und rotiert in ihrer Abtriebswellenlagerung. Dabei können insbesondere an der Antriebswellenlagerung Schäden mangels ausreichender Schmierung entstehen.

Es ist die Aufgabe der vorliegenden Erfindung ein eingangs genanntes Fahrzeuggetriebe so weiterzubilden, dass eine ausreichende Schmierölversorgung in allen Fahrsituationen bei möglichst geringem Kosten- und Energieaufwand gewährleistet ist.

Die Lösung dieser Aufgabe wird durch ein Fahrzeuggetriebe gemäß Anspruch 1 erreicht. Vorteilhafte Ausgestaltungen und Weiterbildungen gehen aus den abhängigen Ansprüchen hervor.

Demnach wird ein Fahrzeuggetriebe mit einer Antriebswelle, einer Abtriebswelle und mit Getriebeelementen, die in einem Getriebegehäuse zur Realisierung verschiedener Übersetzungsverhältnisse zwischen der Antriebswelle und der Abtriebswelle angeordnet sind, vorgeschlagen. Typische Getriebeelemente zur Realisierung verschiedener Übersetzungsverhältnisse sind Zahnräder, Wellen, Kupplungen, Bremsen, hydrodynamische Elemente und Planetenradsätze.

Die Abtriebswelle ist mittels eines Abtriebswellenlagers in dem Getriebegehäuse gelagert. Unter dem Begriff Abtriebswelle wird jedes rotierbar gelagerte Bauteil verstanden, über das die Antriebsleistung aus dem Getriebegehäuse heraus an die nachfolgenden Elemente des Antriebsstrangs übertragen wird. Dessen äußere Form ist dabei nicht auf die Form einer einfachen Vollwelle beschränkt. Die Abtriebswelle kann auch aus mehreren einzelnen Elementen bestehen, die starr oder zumindest verdrehfest miteinander verbunden sind und so gemeinsam die Abtriebswelle bilden. So können beispielsweise ein fest mit der Abtriebswelle verbundenes Kupplungselement im Getriebegehäuse und ein außerhalb des Getriebegehäuses angeordneter Abtriebsflansch ebenfalls zur Abtriebswelle gehören.

Das Fahrzeuggetriebe weist ferner eine Schaltkupplung auf, mit der eine Triebverbindung zwischen den Getriebeelementen und der Abtriebswelle wahlweise herstellbar oder trennbar ist. Der Antriebsstrang des Fahrzeugs kann demnach mittels der Schaltkupplung insbesondere unmittelbar vor der Abtriebswelle unterbrochen werden, sodass die Abtriebswelle bei rollendem Fahrzeug von der Abtriebsseite her angetrieben wird, jedoch nicht die Getriebeelemente.

Des Weiteren ist auf der Abtriebswelle ein Förderrad angeordnet, mit dem das Abtriebswellenlager zumindest zeitweise aus einem Ölsumpf mit Schmieröl versorgt wird. Das auf der Abtriebswelle angeordnete Förderrad dreht sich sobald die Abtriebswelle rotiert. Dabei nimmt das Förderrad nach dem bekannten Prinzip der Tauchschmierung aus dem Ölsumpf Schmieröl mit, welches zu dem Abtriebswellenlager gefördert wird.

Auf diese Weise kann das Abtriebswellenlager durch das Förderrad mit Schmieröl versorgt werden, wenn die Abtriebswelle rotiert. Damit ist die Schmierung des Abtriebswellenlagers gewährleistet, und zwar unabhängig von anderen Schmiereinrichtungen in dem Fahrzeuggetriebe. Andere Schmiereinrichtungen wie eine Druckschmiereinrichtung mittels einer Ölpumpe werden typischerweise über die Antriebswelle des Fahrzeuggetriebes angetrieben. Daher werden andere Schmiereinrichtungen beim Stillstand der Antriebswelle nicht betrieben. Situationen in denen die Antriebswelle stillsteht und die Abtriebswelle rotiert entstehen beispielsweise beim Abschleppen eines Fahrzeugs wie eingangs beschrieben. In solchen Situationen verhindert die vorliegende Erfindung Lagerschäden insbesondere am Abtriebswellenlager durch eine fehlende oder unzureichende Schmierung.

Als Förderrad wird jedes auf der Abtriebswelle angeordnete Bauelement verstanden, das in der Lage ist bei rotierender Abtriebswelle Schmieröl zu fördern. Das Förderrad muss daher nicht zwangsläufig die äußere Form eines vollständigen Rades aufweisen. Stattdessen kann das Förderrad beispielsweise kreuzförmig oder sternförmig angeordnete Arme aufweisen, die zumindest zeitweise in den Ölsumpf im Fahrzeuggetriebe eintauchen und dadurch bei Rotation der Abtriebswelle Schmieröl fördern. Das Abtriebswellenlager kann beispielsweise als Wälzlager, insbesondere als Kegelrollenlager ausgeführt sein. Auch eine komplexere Lageranordnung bestehend aus mehreren einzelnen Wälzlagern zur Lagerung der Abtriebswelle wird in diesem Zusammenhang als Abtriebswellenlager bezeichnet.

Bevorzugt umfasst das Fahrzeuggetriebe auch eine über die Antriebswelle antreibbare Schmiereinrichtung, die bei rotierender Antriebswelle ein Aufnahmevolumen mit Schmieröl befüllt, wodurch der Ölpegel eines Ölsumpfs in dem Getriebegehäuse abgesenkt wird. Die Schmiereinrichtung kann im normalen Fahrbetrieb alle Schmierstellen des Fahrzeuggetriebes, einschließlich des Abtriebswellenlagers mit Schmieröl versorgen. Dabei ist ferner vorgesehen, dass die Ölmenge in dem Getriebegehäuse und das Aufnahmevolumen so aufeinander abgestimmt sind, dass das Förderrad bei rotierender Antriebswelle nicht in den Ölsumpf eintaucht, während es bei stillstehender Antriebswelle in den Ölsumpf eintaucht. Bei rotierender Antriebswelle, also im normalen Fahrbetrieb des Fahrzeuges, befindet sich demnach das gesamte Förderrad oberhalb des Ölpegels und fördert kein Öl. Dabei entstehen keine Panschverluste durch das Förderrad. Es kann also Energie eingespart werden. Da die Schmiereinrichtung bei rotierender Antriebswelle auch das Abtriebswellenlager ausreichend mit Schmieröl versorgt, ist die Tauchschmierung durch das Förderrad während dieser Zeit nicht erforderlich.

Die über die Antriebswelle antreibbare Schmiereinrichtung kann beispielsweise als Ölumlaufschmierung oder als Tauchschmierung ausgeführt sein. Bei einer Ausführungsform mit einer Tauchschmierung können einzelne der genannten Getriebeelemente, insbesondere Zahnräder, in den Ölsumpf eintauchen und das Schmieröl so im Getriebegehäuse fördern bzw. verteilen, dass alle Schmierstellen ausreichend versorgt werden. Das auf diese Weise im Getriebegehäuse verteilte Schmieröl bildet in diesem Fall das genannte Aufnahmevolumen.

Vorzugsweise ist die Schmiereinrichtung jedoch als Druckschmiereinrichtung mit zumindest einer über die Antriebswelle antreibbaren Ölpumpe ausgeführt. Eine solche Ölpumpe kann entweder direkt von der Antriebswelle angetrieben werden oder über eine oder mehrere weitere Wellen des Fahrzeuggetriebes. Im normalen Fahrbetrieb kann so beispielsweise eine Trockensumpfschmierung realisiert werden. Das genannte Aufnahmevolumen der Druckschmiereinrichtung umfasst insbesondere eine Saugleitung von einem Ölsumpf zu der Ölpumpe und Druckleitungen von der Ölpumpe zu den Schmierstellen. Das Aufnahmevolumen setzt sich also aus verschiedenen Ausnehmungen und Hohlräumen in dem Fahrzeuggetriebe zusammen, beispielsweise sind dies Ölleitungen und Bohrungen im Getriebegehäuse sowie Hohlräume in Druckzylindern oder in hydrodynamischen Wandlern.

Betreffend des Ölpegels des Ölsumpfs spielt selbstverständlich die Form des Getriebegehäuses eine Rolle, insbesondere wie der Innenraum des Getriebegehäuses im Bereich des Ölsumpfs ausgestaltet und dimensioniert ist. Bei der genannten Abstimmung der Ölmenge in dem Getriebegehäuse und dem Aufnahmevolumen wird daher davon ausgegangen, dass die Form des Getriebegehäuses bereits feststeht.

Es wird also im Stillstand so viel Schmieröl in das Getriebegehäuse gefüllt, dass der Ölpegel des Ölsumpfs oberhalb des tiefsten Punktes an dem Förderrad steht, das heißt, dass das Förderrad zumindest soweit in den Ölsumpf eintaucht, dass es bei rotierender Abtriebswelle seine Förderwirkung entfaltet. Gleichzeitig wird jedoch nicht mehr Schmieröl eingefüllt, als dass der Ölpegel des Ölsumpfs bei rotierender Antriebswelle und gefülltem Aufnahmevolumen der Schmiereinrichtung unter den tiefsten Punkt des Förderrades absinkt, sodass das Förderrad nicht in den Ölsumpf eintaucht. Dadurch werden im normalen Fahrbetrieb alle Schmierstellen in dem Fahrzeuggetriebe einschließlich des Abtriebswellenlagers durch die Schmiereinrichtung geschmiert und es entstehen keine Panschverluste, weil das Förderrad nicht in den Ölsumpf eintaucht.

Es versteht sich, dass sich der Ölpegel zwischen den Fahrsituationen mit rotierender und stillstehender Antriebswelle nicht schlagartig sondern etwas zeitverzögert anpasst. Das heißt, dass das Aufnahmevolumen der Schmiereinrichtung sich bei einem kurzzeitigen Stillstand der Antriebswelle nicht sofort und komplett entleert und der Ölpegel bei kurzzeitigen Rotationsunterbrechungen der Antriebswelle unterhalb des Förderrades bleibt. Eventuelle kurzzeitige Unterbrechungen der Schmierölversorgung am Abtriebswellenlager können jedoch in Kauf genommen werden, ohne dass dadurch Nachteile zu befürchten sind, weil auch das am und im Abtriebswellenlager befindliche Schmieröl nicht schlagartig abfließt.

Besonders bevorzugt ist vorgesehen, dass die Schaltkupplung Teil einer Wendeschaltgruppe des Fahrzeuggetriebes ist, wobei die Wendeschaltgruppe eine Vorwärtsfahrtstellung, eine Rückwärtsfahrtstellung und eine Neutralstellung aufweist. Die Schaltkupplung kann also eine dieser drei Schaltstellungen einnehmen. In der Neutralstellung ist die Triebverbindung zwischen den Getriebeelementen und der Abtriebswelle getrennt, das heißt unterbrochen. Derartige Wendeschaltgruppen werden beispielsweise bei Schienenfahrzeugen oder Baumaschinen eingesetzt, um zwei gleichwertige Fahrtrichtungen zu erreichen. Das heißt, dass das Fahrzeug in beiden Fahrtrichtungen, also vorwärts und rückwärts, in denselben Geschwindigkeitsbereichen bzw. Übersetzungsverhältnissen antreibbar ist.

Eine solche Wendeschaltgruppe kann beispielsweise als Planetenradsatz mit einer Schaltkupplung zum Einstellen der Drehrichtungsumkehr ausgeführt sein. Dazu kann der Steg bzw. Planetenträger des Planetenradsatzes gehäusefest angeordnet sein und mithilfe der Schaltkupplung wird die Antriebsleistung entweder über die Elemente des Planetenradsatzes, nämlich ein Sonnenrad, Planetenräder und ein Hohlrad geleitet, wodurch eine Drehrichtungsumkehr bewirkt wird, oder die Antriebsleistung wird ohne Drehrichtungsumkehr direkt von einem Eingangselement des Planetenradsatzes auf die Abtriebswelle geleitet.

In einer ersten Schaltstellung der Schaltkupplung wird also eine Drehrichtungsumkehr zwischen der Antriebswelle und der Abtriebswelle bewirkt, indem die Antriebsleistung über das Sonnenrad, die rotierbaren Planetenräder und das Hohlrad des Planetenradsatzes geleitet wird. In einer zweiten Schaltstellung der Schaltkupplung wird keine Drehrichtungsumkehr bewirkt, indem das Eingangselement des Planetenradsatzes, beispielsweise das Sonnenrad, verdrehfest mit der Abtriebswelle verbunden wird. Eine dritte Schaltstellung bildet die Neutralstellung, in der die Triebverbindung zwischen den Getriebeelementen und der Abtriebswelle getrennt ist.

Die Schaltkupplung kann grundsätzlich als formschlüssige oder als reibschlüssige Kupplung ausgeführt sein. Sie umfasst bevorzugt eine axial verschiebbare Schiebemuffe. Die Schiebemuffe weist eine Kupplungsverzahnung auf, die zumindest mit einer dazu passenden weiteren Kupplungsverzahnung auf der Abtriebswelle koppelbar ist. Derartige Schiebemuffen haben sich als zuverlässige und robuste Schaltelemente bewährt. Die oben beschriebene Neutralstellung liegt in Bezug auf die axiale Verschieberichtung der Schiebemuffe vorzugsweise zwischen der ersten und der zweiten Schaltstellung, sie bildet also eine mittlere Schaltstellung.

Das Förderrad ist vorzugsweise ein Schöpfrad, das an seinem äußeren Umfang Förderelemente aufweist. Diese Förderelemente können beispielsweise schaufelförmig ausgebildet sein oder sie können als Ausnehmungen zur Aufnahme von Schmieröl am äußeren Umfang des Förderrades ausgebildet sein. Die Förderelemente können am Umfangsbereich des Förderrades radialseitig und/oder axialseitig angeformt sein.

Zur Unterstützung der Förderwirkung des Förderrades kann in dem Getriebegehäuse zumindest ein gehäusefestes Ölleitelement angeordnet sein. Ein solches Ölleitelement kann beispielsweise in der Art einer Ummantelung um den Umfangsbereich des Förderrades ausgeführt werden, sodass das von den Förderelementen aufgenommene Öl bei der Rotation des Förderrades durch die Ummantelung solange bzw. soweit von dem Förderrad mitgenommen wird wie erforderlich. Das Ölleitelement kann somit dafür sorgen, dass das Öl während des Transports durch das Förderrad nicht frühzeitig nach außen abgeschleudert wird.

Ein derartiges Ölleitelement bzw. die Ölleitelemente können dazu in dem Ölsumpf eine Öleintrittsöffnung ausbilden, durch die das Öl von dem Ölsumpf in die Förderelemente des Förderrades gelangt um von dem Förderrad mitgenommen zu werden. Um das Öl an der gewünschten Stelle wieder abzugeben kann oberhalb des Ölsumpfs eine Ölaustrittsöffnung an dem Ölleitelement ausgebildet sein, sodass das vom rotierenden Förderrad mitgenommene Schmieröl dort von dem Förderrad abfließt, wo eine optimale Versorgung des Abtriebswellenlagers bewirkt wird. Die Ölaustrittsöffnung kann zur verbesserten Schmiermittelversorgung beispielsweise mit zumindest einem Kanal mit dem Abtriebswellenlager verbunden sein.

Eine weitere Erhöhung der Förderwirkung des Förderrads kann durch ein im Bereich der Ölaustrittsöffnung angeordnetes, gehäusefestes Abstreifelement erreicht werden. Ein solches Abstreifelement sorgt im Bereich der Ölaustrittsöffnung dafür, dass möglichst viel von dem vom rotierenden Förderrad mitgenommenen Schmieröl an der gewünschten Stelle im Getriebegehäuse vom Förderrad abgestreift und in Richtung des Abtriebswellenlagers gefördert wird.

Die Erfindung wird nachfolgend anhand der beigefügten Figuren beispielhaft näher erläutert. Dabei zeigen
- Fig. 1: eine schematische Darstellung eines mit einem erfindungsgemäßen Fahrzeuggetriebe ausgestatteten Antriebsstrangs;
- Fig. 2: einen Ausschnitt aus einem erfindungsgemäßen Fahrzeuggetriebe und
- Fig. 3: eine Schnittdarstellung aus dem Fahrzeuggetriebe mit einer Schnittebene durch das Förderrad.

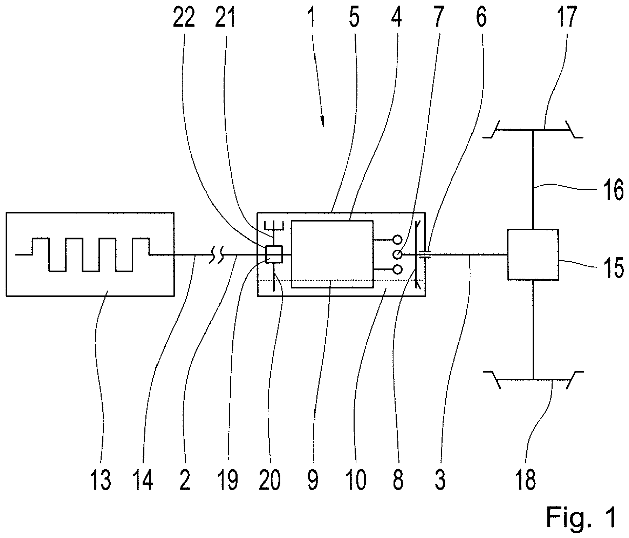

Der Antriebsstrang gemäß Fig. 1 wird durch einen Antriebsmotor 13, beispielsweise ein Verbrennungsmotor, angetrieben. Eine Motorabtriebswelle 14 des Antriebsmotors 13 ist mit einer Antriebswelle 2 des Fahrzeuggetriebes 1 verbunden. Zwischen der Motorabtriebswelle 14 und der Antriebswelle 2 des Fahrzeuggetriebes 1 kann in einigen Ausführungsbeispielen auch eine Anfahrkupplung angeordnet sein.

In einem Getriebegehäuse 5 des Fahrzeuggetriebes 1 sind zur Realisierung verschiedener Übersetzungsverhältnisse zwischen der Antriebswelle 2 und der Abtriebswelle 3 miteinander zusammenwirkende Getriebeelemente 4 angeordnet. Diese Getriebeelemente 4 sind der Übersichtlichkeit halber in Fig. 1 lediglich als ein Rechteck dargestellt. Die Abtriebswelle 3 ist mittels eines Abtriebswellenlagers 6 in dem Getriebegehäuse 5 gelagert.

Die Abtriebswelle 3 treibt über ein Achsgetriebe 15 eine Radachse 16 des Fahrzeugs, vorliegend eines Schienenfahrzeugs an. Auf der Radachse 16 sind zwei Schienenräder 17 und 18 befestigt, mit denen das Schienenfahrzeug auf Schienen rollt und angetrieben wird.

Das Fahrzeuggetriebe 1 umfasst eine Schaltkupplung 7, mit der eine Triebverbindung zwischen den Getriebeelementen 4 und der Abtriebswelle 3 wahlweise herstellbar oder trennbar ist. Die in der Fig. 1 symbolisch dargestellte Schaltkupplung 7 weist drei Schaltstellungen auf und ist in einer neutralen mittleren Schaltstellung dargestellt. In dieser neutralen Schaltstellung ist die Triebverbindung unterbrochen, d.h. getrennt. In den beiden anderen Schaltstellungen ist eine Triebverbindung zwischen den Getriebeelementen 4 und der Abtriebswelle 3 hergestellt.

Auf der Abtriebswelle 3 ist ein Förderrad 8 angeordnet. Mit dem Förderrad 8 kann das Abtriebswellenlager 6 zumindest zeitweise mit Schmieröl aus einem Ölsumpf 10 versorgt werden. Der Ölsumpf 10 bildet an seiner Oberfläche in dem Getriebegehäuse 5 einen Ölpegel 9 aus.

Eine Schmiereinrichtung 22 ist auf der Antriebsseite des Fahrzeuggetriebes 1 angeordnet. Die Schmiereinrichtung 22 ist als Druckschmiereinrichtung ausgeführt und umfasst eine Ölpumpe 19, die über die Antriebswelle 2 antreibbar ist. Die Ölpumpe 19 kann entweder direkt von der Antriebswelle 2 oder über eine weitere Welle in dem Fahrzeuggetriebe 1 angetrieben werden. Die Ölpumpe 19 saugt durch eine Saugleitung 20 Schmieröl aus dem Ölsumpf 10 und fördert es über Druckleitungen 21 zu verschiedenen Schmierstellen in dem Fahrzeuggetriebe 1. Die Saugleitung 20, Hohlräume in der Ölpumpe 19 und die Druckleitungen 21 bilden einen wesentlichen Teil des Aufnahmevolumens, das beim Betrieb der Schmiereinrichtung 22 befüllt wird und dafür sorgt, dass der Ölpegel 9 im Ölsumpf 10 um einen bestimmten Wert absinkt. Gemäß einer Ausführungsform der Erfindung befüllt die Schmiereinrichtung 22 bei rotierender Antriebswelle 2 das Aufnahmevolumen mit so viel Schmieröl, dass der Ölpegel 9 soweit abgesenkt wird, dass das Förderrad 8 nicht in den Ölsumpf 10 eintaucht und somit auch keine Panschverluste verursacht. Steht die Antriebswelle 2 und die Schmiereinrichtung 22 dagegen still, so läuft das Öl aus dem Aufnahmevolumen zurück in den Ölsumpf, dessen Ölpegel 9 dadurch soweit ansteigt, dass das Förderrad 8 zumindest mit dessen Förderelementen 12 in den Ölsumpf 10 eintaucht. Dreht sich die Abtriebswelle 3 bei diesem Ölpegel 9, dann fördert das mit der Abtriebswelle 3 rotierende Förderrad 8 Schmieröl zu dem Abtriebswellenlager 6.

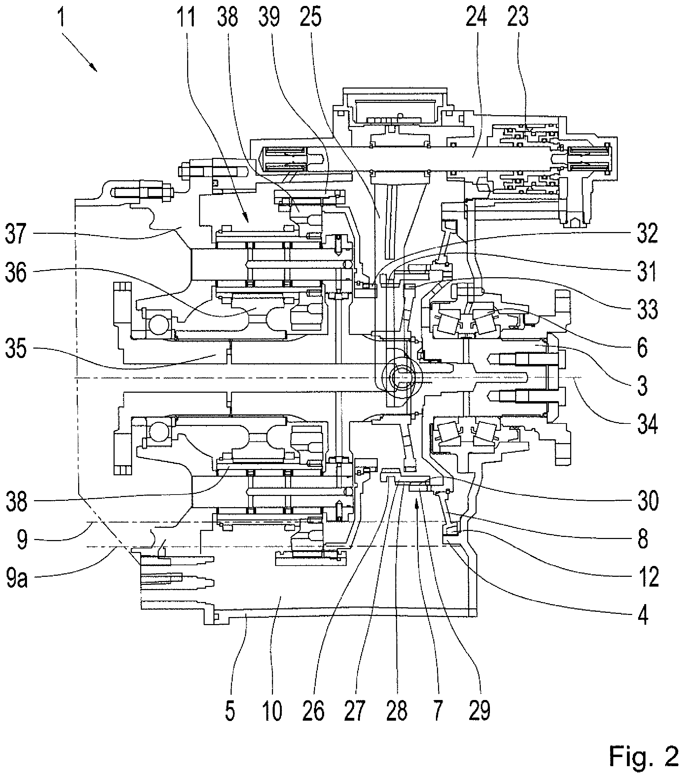

In der Fig. 2 ist der abtriebsseitige Bereich eines erfindungsgemäßen Fahrzeuggetriebes mit der Schaltkupplung 7 dargestellt, mit der eine Triebverbindung zwischen den Getriebeelementen 4 und der Abtriebswelle 3 wahlweise herstellbar oder trennbar ist. Die Abtriebswelle 3 ist rotierbar um eine Rotationsachse 34 in dem Getriebegehäuse 5 gelagert. Zu diesem Zweck ist ein zweireihiges Kegelrollenlager als Abtriebswellenlager 6 vorgesehen.

In dem Getriebegehäuse 5 ist ferner eine Wendeschaltgruppe 11 angeordnet, die einen Teil der Getriebeelemente 4 des Fahrzeuggetriebes 1 umfasst. Die Wendeschaltgruppe 11 ist als Planetenradstufe ausgeführt und umfasst eine koaxial zur Rotationsachse 34 angeordnete Sonnenradwelle 35 mit einem darauf befestigten Sonnenrad 36. Die Sonnenradwelle 35 bildet das Eingangselement des Planetenradsatzes, über das Antriebsleistung zugeführt wird. Ferner umfasst die Wendeschaltgruppe 11 einen gehäusefesten Planetenträger 37, auf dem mehrere Planetenräder 38 rotierbar angeordnet sind, sowie ein Hohlrad 39. Jedes der Planetenräder 38 steht sowohl mit dem Sonnenrad 36 als auch mit dem Hohlrad 39 dauernd im Eingriff. Die Planetenräder 39 sind als Stufenplanetenräder ausgebildet.

Die Schaltkupplung 7 besteht im Wesentlichen aus einer Schiebemuffe 27, die mittels einer Verschiebeverzahnung 28 verdrehfest und axial verschiebbar mit der Abtriebswelle 3 verbunden ist. Die Abtriebswelle 3 weist dazu ein Mitnahmeteil 29 mit einer zur Verschiebeverzahnung 28 passenden Mitnahmeverzahnung 30 auf. Die Schiebemuffe 27 ist mittels einer druckmittelbetätigten Kolben-Zylinder-Einheit 23 betätigbar. Auf einer Kolbenstange 24 der Kolben-Zylinder-Einheit 23 ist eine Schaltgabel 25 angeordnet, die mittels zweier Gleitsteine in eine Umlaufnut 26 der Schiebemuffe 27 eingreift. Entsprechend der Schaltkupplung 7 weist die Kolben-Zylinder-Einheit 23 ebenfalls drei Schaltstellungen auf, wobei in der Fig. 2 die mittlere, neutrale Schaltstellung dargestellt ist. In dieser neutralen Schaltstellung steht die Kupplungsverzahnung 31 der Schiebemuffe 27 mit keiner der den beiden anderen Schaltstellungen zugeordneten Kupplungsverzahnungen 32 und 33 im Eingriff, so dass die Triebverbindung an dieser Stelle unterbrochen ist.

Mittels der Schaltkupplung 7 kann wahlweise eines von zwei Getriebeelementen 4, nämlich entweder die Sonnenradwelle 35 oder das Hohlrad 39, verdrehfest mit der Abtriebswelle 3 verbunden werden. Wird die Schiebemuffe 33 ausgehend von der dargestellten mittleren Neutralstellung axial nach links in eine erste Schaltstellung verschoben wird, so besteht eine Antriebsverbindung von der Sonnenradwelle 35 über die Planetenräder 38 und das Hohlrad 39 auf die Abtriebswelle 3. Eine Schiebemuffenkupplungsverzahnung 31 steht in der ersten Schaltstellung mit einer verdrehfest zum Hohlrad 39 angeordneten ersten Kupplungsverzahnung 32 im Eingriff. In dieser ersten Schaltstellung der Schaltkupplung 7 findet in der Wendeschaltgruppe 11 eine Drehrichtungsumkehr statt, weil der Planetenträger 37 gehäusefest steht.

Wird die Schiebemuffe 33 ausgehend von der dargestellten mittleren Neutralstellung axial nach rechts in eine zweite Schaltstellung verschoben, so besteht eine direkte Antriebsverbindung zwischen der Sonnenradwelle 35 und der Abtriebswelle 3. Die Schiebemuffenkupplungsverzahnung 31 steht in der zweiten Schaltstellung mit einer verdrehfest auf der Sonnenradwelle 35 angeordneten zweiten Kupplungsverzahnung 33 im Eingriff. In dieser zweiten Schaltstellung der Schaltkupplung 7 findet in der Wendeschaltgruppe 11 keine Drehrichtungsumkehr statt.

Im unteren Bereich des Getriebegehäuses 5 ist ein Ölsumpf 10 mit einem Ölpegel 9 ausgebildet. Der Ölpegel 9 erreicht eine Höhe, in der das auf der Abtriebswelle 3 befestigte Förderrad 8 in den Ölsumpf 10 eintaucht. Unterhalb des Ölpegels 9 ist in Fig. 2 ein niedriger Ölpegel 9a eingezeichnet, der so niedrig ist, dass das Förderrad 8 nicht mehr in den Ölsumpf 10 eintaucht. Dieser niedrige Ölpegel 9a stellt sich ein, wenn die Schmiereinrichtung 22 wie oben beschrieben durch die rotierende Antriebswelle 2 angetrieben wird und das Aufnahmevolumen auffüllt.

Das Förderrad 8 weist an seinem äußeren Umfang Förderelemente 12 auf. Die Förderelemente 12 sind vorliegend als Ausnehmungen bzw. Schaufeln ausgebildet, um beim Eintauchen in den Ölsumpf 10 Schmieröl aufzunehmen, das im Verlauf des weiteren Rotierens des Förderrades 8 wieder abgegeben und dem Abtriebswellenlager 6 zugeführt wird.

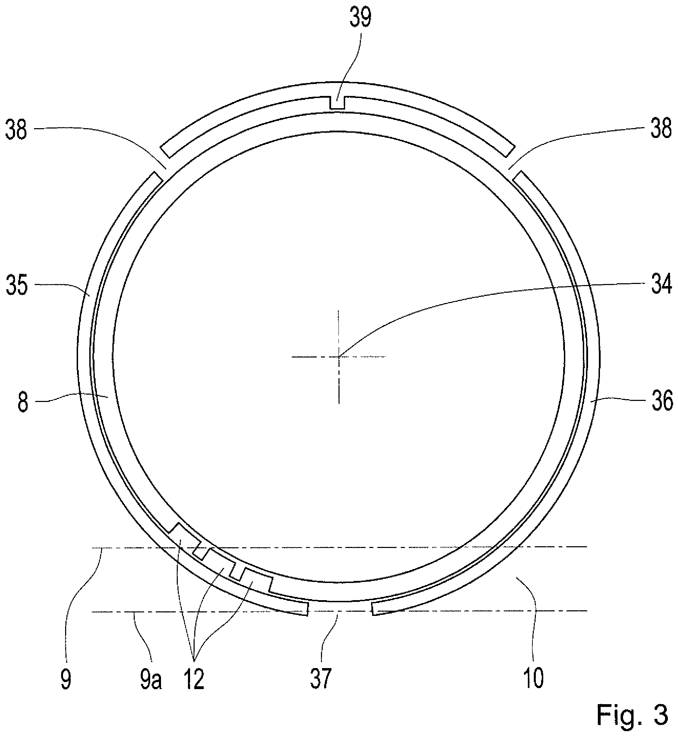

In der Schnittdarstellung aus Fig. 3 ist die Schnittebene senkrecht zu der Rotationsachse 34 durch das Förderrad 8 gelegt worden. Das Förderrad 8 ist rotierbar um die Rotationsachse 34 angeordnet. Mehrere Ausnehmungen am Umfangsbereich des Förderrads 8 bilden Förderelemente 12, die beim Eintauchen in den Ölsumpf 10 Schmieröl aufnehmen, welches beim weiteren Rotieren mitgenommen und wieder abgegeben wird. In anderen Ausführungsformen der Erfindung können Förderelemente 12 bzw. Ausnehmungen auch und in größerer Zahl und gleichmäßig um den gesamten Umfang verteilt am Förderrad angeordnet sein.

Auch in Fig. 3 sind zwei Ölpegel dargestellt. Ein Ölpegel 9, bei dem das Förderrad 8 in den Ölsumpf 10 eintaucht und ein niedriger Ölpegel 9a, bei dem das Förderrad 8 nicht mehr in den Ölsumpf 10 eintaucht. Der niedrige Ölpegel 9a stellt sich ein, wenn die Schmiereinrichtung 22 im normalen Fahrbetrieb von der Antriebswelle 2 angetrieben wird und dadurch das Aufnahmevolumen gefüllt ist.

Zwei Ölleitelemente 35 und 36 sind gehäusefest in dem Getriebegehäuse 5 angeordnet und so entlang des Außenumfangs des Förderrads 8 angeordnet, dass die Förderwirkung erhöht wird. Die Ölleitelemente 35 und 36 ummanteln das Förderrad in einem gewissen Bereich. In dem Bereich des Ölsumpfs 10 lassen die Ölleitelemente 35 und 36 eine Öleintrittsöffnung 37 frei, durch die das Schmieröl aus dem Ölsumpf 10 ungehindert zu den Ausnehmungen des Förderrads 8 strömen kann. Im obenliegenden Bereich des Förderrads 8, also oberhalb des Ölpegels 9 lassen die Ölleitelemente 35 und 36 zwei Ölaustrittsöffnungen 38 frei, durch die das Schmieröl vom Förderrad 8 abfließen kann in Richtung der Schmierstellen, insbesondere in Richtung des Abtriebswellenlagers 6. Ein gehäusefestes Abstreifelement 39 ist im Bereich der Austrittsöffnungen 38 angeordnet, um die Förderwirkung weiter zu verbessern.

### Bezugszeichen

- 1: Fahrzeuggetriebe
- 2: Antriebswelle
- 3: Abtriebswelle
- 4: Getriebeelemente
- 5: Getriebegehäuse
- 6: Abtriebswellenlager
- 7: Schaltkupplung
- 8: Förderrad
- 9: Ölpegel
- 9a: Ölpegel
- 10: Ölsumpf
- 11: Wendeschaltgruppe
- 12: Förderelemente
- 13: Antriebsmotor
- 14: Motorabtriebswelle
- 15: Achsgetriebe
- 16: Radachse
- 17: Schienenrad
- 18: Schienenrad
- 19: Ölpumpe
- 20: Saugleitung
- 21: Druckleitung
- 22: Schmiereinrichtung
- 23: Kolben-Zylinder-Einheit
- 24: Kolbenstange
- 25: Schaltgabel
- 26: Umlaufnut
- 27: Schiebemuffe
- 28: Verschiebeverzahnung
- 29: Mitnahmeteil
- 30: Mitnahmeverzahnung
- 31: Kupplungsverzahnung
- 32: Kupplungsverzahnung
- 33: Kupplungsverzahnung
- 34: Rotationsachse
- 35: Ölleitelemente
- 36: Ölleitelemente
- 37: Öleintrittsöffnung
- 38: Ölaustrittsöffnung
- 39: Abstreifelement
- 40: Ölleitelement
- 41: Sonnenrad
- 42: Planetenträger
- 43: Planetenräder
- 44: Hohlrad

## Patentansprüche

1. Fahrzeuggetriebe (1) mit einer Antriebswelle (2), einer Abtriebswelle (3) und mit Getriebeelementen (4), die in einem Getriebegehäuse (5) des Fahrzeuggetriebes (1) zur Realisierung verschiedener Übersetzungsverhältnisse zwischen der Antriebswelle (2) und der Abtriebswelle (3) angeordnet sind, wobei die Abtriebswelle (3) mittels eines Abtriebswellenlagers (6) in dem Getriebegehäuse (5) gelagert ist, und wobei das Fahrzeuggetriebe (1) eine Schaltkupplung (7) aufweist, mit der eine Triebverbindung zwischen den Getriebeelementen (4) und der Abtriebswelle (3) wahlweise herstellbar oder trennbar ist,
**dadurch gekennzeichnet, dass** auf der Abtriebswelle (3) ein Förderrad (8) angeordnet ist, mit dem das Abtriebswellenlager (6) zumindest zeitweise mit Schmieröl versorgt wird, dass das Förderrad (8) ein Schöpfrad ist, das an seinem äußeren Umfang Förderelemente (12) aufweist, die als Ausnehmungen zur Aufnahme von Schmieröl ausgebildet sind.

2. Fahrzeuggetriebe nach Anspruch 1, **dadurch gekennzeichnet, dass** das Fahrzeuggetriebe (1) eine über die Antriebswelle (2) antreibbare Schmiereinrichtung (22) umfasst, die bei rotierender Antriebswelle (2) ein Aufnahmevolumen mit Schmieröl befüllt, wodurch ein Ölpegel (9) eines Ölsumpfs (10) in dem Getriebegehäuse (5) abgesenkt wird, und dass die Ölmenge in dem Getriebegehäuse (5) und das Aufnahmevolumen so aufeinander abgestimmt sind, dass das Förderrad (8) bei rotierender Antriebswelle (2) nicht in den Ölsumpf (10) eintaucht, wogegen das Förderrad (8) bei stillstehender Antriebswelle (2) in den Ölsumpf (10) eintaucht.

3. Fahrzeuggetriebe nach Anspruch 2, **dadurch gekennzeichnet, dass** die Schmiereinrichtung (22) als Druckschmiereinrichtung mit zumindest einer über die Antriebswelle (2) antreibbaren Ölpumpe (19) ausgeführt ist.

4. Fahrzeuggetriebe nach einem der vorgenannten Ansprüche, **dadurch gekennzeichnet, dass** die Schaltkupplung (7) Teil einer Wendeschaltgruppe (11) des Fahrzeuggetriebes (1) ist, und dass die Wendeschaltgruppe (11) eine Vorwärtsfahrtstellung, eine Rückwärtsfahrtstellung und die Neutralstellung aufweist, wobei in der Neutralstellung die Triebverbindung zwischen den Getriebeelementen (4) und der Abtriebswelle (3) getrennt ist.

5. Fahrzeuggetriebe nach Anspruch 4, **dadurch gekennzeichnet, dass** die Wendeschaltgruppe (11) einen Planetenradsatz umfasst.

6. Fahrzeuggetriebe nach einem der vorgenannten Ansprüche, **dadurch gekennzeichnet, dass** die Schaltkupplung (7) eine Schiebemuffe (27) umfasst.

7. Fahrzeuggetriebe nach einem der vorgenannten Ansprüche, **dadurch gekennzeichnet, dass** in dem Getriebegehäuse (5) zumindest ein gehäusefestes Ölleitelement (35) zur Unterstützung der Förderwirkung des Förderrades (8) angeordnet sind.

8. Fahrzeuggetriebe nach Anspruch 7, **dadurch gekennzeichnet, dass** das Ölleitelement (35) oder die Ölleitelemente (35, 36) in einem Ölsumpf (10) eine Öleintrittsöffnung (37) ausbilden.

9. Fahrzeuggetriebe nach Anspruch 7 oder 8, **dadurch gekennzeichnet, dass** das Ölleitelement (35) oder die Ölleitelemente oberhalb eines Ölsumpfs (10) eine Ölaustrittsöffnung (38) ausbilden.

10. Fahrzeuggetriebe nach Anspruch 9, **dadurch gekennzeichnet, dass** im Bereich der Ölaustrittsöffnung ein gehäusefestes Abstreifelement (39) zur Erhöhung der Förderwirkung des Förderrads (8) angeordnet ist.

## Claims

1. Vehicle transmission (1) with a drive shaft (2), an output shaft (3) and with transmission elements (4) which are arranged in a transmission housing (5) of the vehicle transmission (1) for the realisation of various transmission ratios between the drive shaft (2) and the output shaft (3), the output shaft (3) being mounted in the transmission housing (5) by means of an output shaft bearing (6), and the vehicle transmission (1) having a shifting clutch (7), by means of which a drive connection between the transmission elements (4) and the output shaft (3) can be established or disconnected selectively, **characterized in that** an impeller wheel (8) is arranged on the output shaft (3), by means of which the output shaft bearing (6) is supplied at least temporarily with lubricating oil, **in that** the impeller wheel (8) is a bucket wheel which, on its outer circumference, has conveying elements (12) which are configured as recesses for receiving lubricating oil.

2. Vehicle transmission according to Claim 1, **characterized in that** the vehicle transmission (1) comprises a lubricating device (22) which can be driven via the drive shaft (2) and, in the case of a rotating drive shaft (2), fills a receiving volume with lubricating oil, as a result of which an oil level (9) of an oil sump (10) in the transmission housing (5) is lowered, and **in that** the oil quantity in the transmission housing (5) and the receiving volume are adapted to one another in such a way that, in the case of a rotating drive shaft (2), the impeller wheel (8) does not dip into the oil sump (10), whereas the impeller wheel (8) dips into the oil sump (10) in the case of a stationary drive shaft (2).

3. Vehicle transmission according to Claim 2, **characterized in that** the lubricating device (22) is configured as a pressure lubricating device with at least one oil pump (19) which can be driven via the drive shaft (2) .

4. Vehicle transmission according to one of the preceding claims, **characterized in that** the shifting clutch (7) is part of a reversing shifting group (11) of the vehicle transmission (1), and **in that** the reversing shifting group (11) has a forward driving position, a reverse driving position and the neutral position, the drive connection between the transmission elements (4) and the output shaft (3) being disconnected in the neutral position.

5. Vehicle transmission according to Claim 4, **characterized in that** the reversing shifting group (11) comprises a planetary gear set.

6. Vehicle transmission according to one of the preceding claims, **characterized in that** the shifting clutch (7) comprises a slider sleeve (27).

7. Vehicle transmission according to one of the preceding claims, **characterized in that** at least one oil conducting element (35) which is fixed on the housing is arranged in the transmission housing (5) for assisting the conveying action of the impeller wheel (8).

8. Vehicle transmission according to Claim 7, **characterized in that** the oil conducting element (35) or the oil conducting elements (35, 36) configures/configure an oil inlet opening (37) in an oil sump (10).

9. Vehicle transmission according to Claim 7 or 8, **characterized in that** the oil conducting element (35) or the oil conducting elements configures/configure an oil outlet opening (38) above an oil sump (10).

10. Vehicle transmission according to Claim 9, **characterized in that** a stripping element (39) which is fixed to the housing is arranged in the region of the oil outlet opening in order to increase the conveying action of the impeller wheel (8).

## Revendications

1. Boîte de vitesses de véhicule (1) comprenant un arbre d'entraînement (2), un arbre de prise de force (3) et des éléments de transmission (4) qui sont disposés dans un boîtier de boîte de vitesses (5) de la boîte de vitesses de véhicule (1) pour réaliser différents rapports de démultiplication entre l'arbre d'entraînement (2) et l'arbre de prise de force (3), l'arbre de prise de force (3) étant supporté au moyen d'un palier d'arbre de prise de force (6) dans le boîtier de boîte de vitesses (5), et la boîte de vitesses de véhicule (1) présentant un embrayage (7) avec lequel une liaison d'entraînement entre les éléments de transmission (4) et l'arbre de prise de force (3) peut être établie ou coupée de manière sélective, **caractérisée en ce qu'**une roue de refoulement (8) est disposée sur l'arbre de prise de force (3), avec laquelle le palier d'arbre de prise de force (6) est alimenté au moins temporairement avec de l'huile de lubrification, **en ce que** la roue de refoulement (8) est une roue à godets qui présente au niveau de sa périphérie extérieure des éléments de refoulement (12) qui sont réalisés sous forme d'évidements pour recevoir de l'huile de lubrification.

2. Boîte de vitesses de véhicule selon la revendication 1, **caractérisée en ce que** la boîte de vitesses de véhicule (1) comprend un dispositif de lubrification (22) pouvant être entraîné par le biais de l'arbre d'entraînement (2), lequel, lorsque l'arbre d'entraînement (2) tourne, remplit un volume de réception avec de l'huile de lubrification, de sorte qu'un niveau d'huile (9) d'un carter d'huile (10) dans le boîtier de boîte de vitesses (5) soit abaissé et **en ce que** la quantité d'huile dans le boîtier de boîte de vitesses (5) et le volume de réception sont ajustés l'un à l'autre de telle sorte que la roue de refoulement (8), lorsque l'arbre d'entraînement (2) tourne, ne plonge pas dans le carter d'huile (10), mais par contre que la roue de refoulement (8) plonge dans le carter d'huile (10) lorsque l'arbre d'entraînement (2) est à l'arrêt.

3. Boîte de vitesses de véhicule selon la revendication 2, **caractérisée en ce que** le dispositif de lubrification (22) est réalisé sous forme de dispositif de lubrification sous pression avec au moins une pompe à huile (19) pouvant être entraînée par le biais de l'arbre d'entraînement (2) .

4. Boîte de vitesses de véhicule selon l'une quelconque des revendications précédentes, **caractérisée en ce que** l'embrayage (7) fait partie d'un groupe d'inversion (11) de la boîte de vitesses de véhicule (1), et **en ce que** le groupe d'inversion (11) présente une position de marche avant, une position de marche arrière et une position neutre, dans la position neutre, la liaison d'entraînement entre les éléments de transmission (4) et l'arbre de prise de force (3) étant coupée.

5. Boîte de vitesses de véhicule selon la revendication 4, **caractérisée en ce que** le groupe d'inversion (11) comprend un train planétaire.

6. Boîte de vitesses de véhicule selon l'une quelconque des revendications précédentes, **caractérisée en ce que** l'embrayage (7) comprend un manchon de commande (27).

7. Boîte de vitesses de véhicule selon l'une quelconque des revendications précédentes, **caractérisée en ce qu'**au moins un élément de guidage d'huile (35) fixé au boîtier, pour supporter l'effet de refoulement de la roue de refoulement (8), est disposé dans le boîtier de boîte de vitesses (5).

8. Boîte de vitesses de véhicule selon la revendication 7, **caractérisée en ce que** l'élément de guidage d'huile (35) ou les éléments de guidage d'huile (35, 36) constituent une ouverture d'entrée d'huile (37) dans un carter d'huile (10).

9. Boîte de vitesses de véhicule selon la revendication 7 ou 8, **caractérisée en ce que** l'élément de guidage d'huile (35) ou les éléments de guidage d'huile constituent une ouverture de sortie d'huile (38) au-dessus d'un carter d'huile (10) .

10. Boîte de vitesses de véhicule selon la revendication 9, **caractérisée en ce que** dans la région de l'ouverture de sortie d'huile est disposé un élément de raclage (39) fixé au boîtier pour augmenter l'effet de refoulement de la roue de refoulement (8).
